# EUROPEAN PATENT SPECIFICATION

(11) **EP 0 426 243 B1**
(45) Date of publication and mention of the grant of the patent: **20.03.1996**
(21) Application number: 90202848.9
(22) Date of filing: 25.10.1990
(51) Int. Cl.: C08K 13/02, C08L 77/00

(54) **Polyamide moulding compositions**
Polyamidformmassen
Matières à mouler à base de polyamide

(30) Priority: 03.11.1989 GB 8924804
(43) Date of publication of application: 08.05.1991
(73) Proprietor: T&N TECHNOLOGY LIMITED, Rugby Warwickshire, CV22 7SB (GB)
(72) Inventor: Williams, Richard Stuart, Rugby, Warwickshire, CV21 4BT (GB)
(74) Representative: Hadfield, Robert Franklin

(56) References cited:
- GB-A- 1 176 346
- JP-A-60 232 610
- US-A- 2 214 405
- DATABASE WPIL, no. 86-004627, Derwent & JP-A-60 232 610
- Vieweg/Müller "Kunststoff-Hanbuch", Vol. VI, Polyamide, Carl Hanser Verlag München 1966, pp. 238/9, 242/3 and 671-5

## Description

This invention relates to polyamide moulding compositions, and in particular to those compositions which contain magnesium hydroxide as flame-retardant.

JP-A-60-232610 discloses nylon moulding compositions containing 10-60% by weight of magnesium hydroxide; it also discloses articles moulded from these compositions. Magnesium hydroxide is a flame-retardant which has particularly attractive properties: it is safe to handle, and when subjected to flame it decomposes endothermically with liberation of water. However, when included in polyamides, for example nylon 6 and nylon 66, in an amount above about 10% by weight (depending on the fineness of the hydroxide and the viscosity of the polymer material), it produces obvious surface defects in articles moulded from them. If it is employed in an amount (15-30% by weight of the polyamide moulding composition) required to achieve an acceptable glow wire rating when tested according to British Standard BS 6458 section 2.1 of 1984, the defects are so serious as to make the moulded article unacceptable.

We have now found that the tendency for surface defects to arise when articles are moulded from a polyamide moulding composition containing 15 to 65% by weight of magnesium hydroxide is much reduced by including in the composition from 1 to 9% by weight of an aryl sulphonamide (for example benzene sulphonamide) whose sulphonamide group is of the formula -SO₂NH₂.

The aryl sulphonamide thus constitutes from 1 to 9% by weight of the polyamide plus magnesium hydroxide plus sulphonamide ingredients.

The aryl radical of the sulphonamide is preferably a phenyl radical, and this may be substituted with an alkyl radical, as in o- or p- methylbenzene sulphonamide, ie a toluene sulphonamide, or with an amino group, as in m- or p-aminobenzene sulphonamide. As already indicated, the sulphonamide group itself need not be -SO₂ NH₂ (though this is preferred because such sulphonamides are easily accessible). The sulphonamide may for example be N-(N-butyl) or N-(n-octyl)-benzene sulphonamide.

Although the magnesium hydroxide content of the nylon 6 or nylon 66 moulding composition incorporating the sulphonamide may be in the range 10-65%, it is preferably in the range of 15-50% by weight.

The sulphonamide does not adversely affect the useful property that magnesium hydroxide has of raising the thermal conductivity of the moulded article, of improving its resistance to electrical tracking and not adversely affecting its glow wire rating.

The inclusion of sulphonamide can be carried out with flame-retardant polyamide moulding compositions based on red phosphorus, magnesium hydroxide and reinforcing mineral fibres, such as are disclosed in our GB-A-2,200,913.

The invention is further illustrated by the following Examples.

A medium viscosity nylon 6 was compounded with magnesium hydroxide (average particle size 0.6 µm; purity 99% after drying) in a Baker Perkins twin screw extruder at a barrel temperature of 250°C. Compounding was then repeated using toluene p-sulphonamide at various levels.

Test mouldings were made from each composition using standard injection moulding techniques, and the mouldings were examined for surface appearance and tested for flame-retardant properties. The compositions (shown in % by weight of the various ingredients), and results obtained by moulding after compounding, were:-

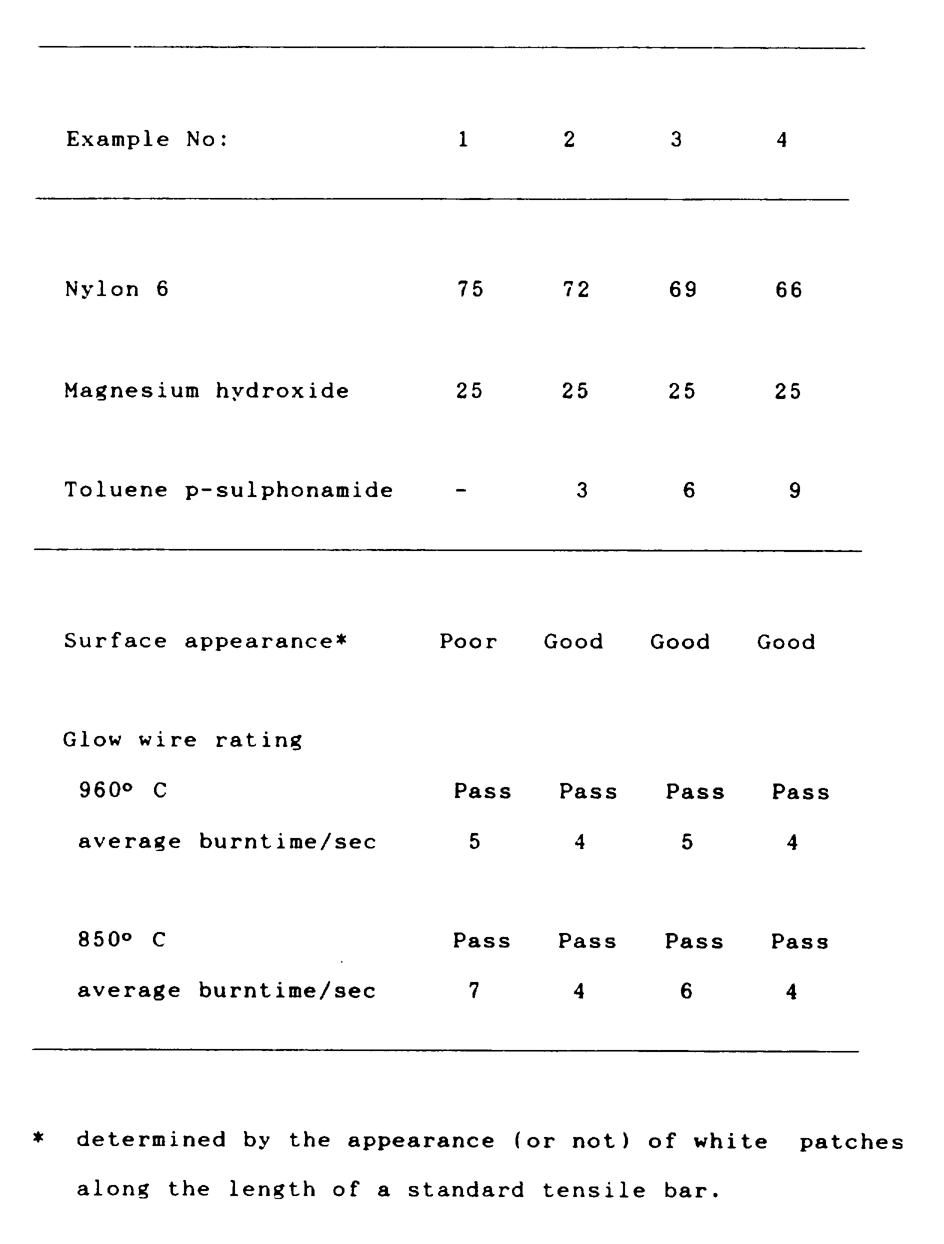

## Claims

1. A nylon 6 or nylon 66 polyamide moulding composition containing from 15 to 65% by weight of magnesium hydroxide as flame-retardant, and from 1 to 9% by weight of an aryl sulphonamide whose sulphonamide group is of the formula SO₂NH₂.

2. A composition according to claim 1 in which the magnesium hydroxide constitutes 15 to 50% by weight of the composition.

3. A composition according to claim 1 or 2 in which the sulphonamide is a phenyl sulphonamide, whose phenyl group may bear an alkyl substituent.

4. A composition according to claim 3 in which the sulphonamide is toluene p-sulphonamide.

5. An article moulded from a polyamide moulding composition according to any preceding claim.

## Patentansprüche

1. Nylon 6- oder Nylon 66-Polyamidformmasse, enthaltend 15 bis 65 Gew.-% Magnesiumhydroxid als Flammverzögerer und 1 bis 9 Gew.-% eines Arylsulfonamids, dessen Sulfonamidgruppe die Formel SO₂NH₂ hat.

2. Masse nach Anspruch 1, dadurch gekennzeichnet, daß das Magnesiumhydroxid 15 bis 50 Gew.-% der Masse ausmacht.

3. Masse nach Anspruch 1 oder 2, dadurch gekennzeichnet, daß das Sulfonamid ein Phenylsulfonamid ist, dessen Phenylgruppe einen Alkylsubstituenten aufweisen kann.

4. Masse nach Anspruch 3, dadurch gekennzeichnet, daß das Sulfonamid ein Toluol-p-sulfonamid ist.

5. Gegenstand geformt aus aus einer Polyamidformmasse gemäß irgendeinem der vorhergehenden Ansprüche.

## Revendications

1. Composition à mouler à base de polyamide notamment nylon 6 ou nylon 66 contenant de 15 à 65% en poids d'hydroxyde de magnésium comme ignifuge et de 1 à 9% en poids d'un arylsulfamide dont le groupe sulfamide est de formule SO₂NH₂.

2. Composition selon la revendication 1, dans laquelle l'hydroxyde de magnésium constitue 15 à 50% en poids de la composition.

3. Composition selon la revendication 1 ou 2, dans laquelle le sulfamide est un phénylsulfamide, dont le groupe phényle peut porter un substituant alkyle.

4. Composition selon la revendication 3, dans laquelle le sulfamide est le p-sulfamidotoluène.

5. Article moulé avec une composition à mouler à base de polyamide selon n'importe quelle revendication précédente.
